# EUROPEAN PATENT APPLICATION

(11) **EP 2 505 083 A1**
(43) Date of publication of application: **03.10.2012**
(21) Application number: 11382087.2
(22) Date of filing: 30.03.2011
(51) Int. Cl.: A23L 3/015, A23L 2/42, A23L 2/46

(54) **Continuous procedure of sterilization of fruit and vegetable juices by means of ultra-high pressure homogenization (UHPH)**

(71) Applicant: Universidad Autónoma De Barcelona (UAB), 08193 Bellaterra (Barcelona) (ES)
(72) Inventor: Guamis López, Buenaventura, 08172, BARCELONA (ES); Hernández Herrero, Manuela, 08194, BARCELONA (ES); Gervilla Fernández, Ramón, 08100, BARCELONA (ES); Roig Sagués, Arturo Javier, 08290, BARCELONA (ES); Saldo Periago, Jordi, 08912, BARCELONA (ES); Quevedo Terré, Joan Miquel, 08015, BARCELONA (ES)
(74) Representative: Carvajal y Urquijo, Isabel

(57) **Abstract**

Continuous procedure of sterilization of fruit and vegetable juices by means of ultra-high pressure homogenization (UHPH) for their stabilization and conservation, which comprises an extraction of fruit and/or vegetable juice, storage of the juice at a temperature between 0°C and 4°C, pre-heating at a temperature (Tₚ) between 4 and 90°C, treatment of the juice by means of ultra-high pressure homogenization at a pressure (Pᵤ) between 200 and 400MPa, with or without retention, through an ultra-high pressure valve, instant cooling of the juice to a temperature (Tₑ) between 4 and 20°C, storage in an aseptic tank at the temperature between 4 and 20°C, and aseptic packaging of the juice in an aseptic packaging system.

## Description

### Field of the invention

The present invention refers to a continuous procedure of sterilization of fruit and vegetable juices by means of ultra-high pressure homogenization, for their stabilization and conservation at room temperature.

### Background of the invention

Fruit juices are very popular in many countries, since consumers value their good flavour and great vitamin content. However, fresh fruit juices have a very short life under refrigeration, so it is necessary that they undergo treatments that guarantee their conservation for their correct commercialization. The causes of the alteration of the juices are basically microbiological and enzymatic. The microbiological alteration of juices produces abnormal odours, cloudiness and gas formation, due to the proliferation of yeast, mould and acid-resistant bacteria, which can grow in the low pH interval of the juices, for example, *Saccharomyces cerevisae* or *Lactobacillus brevis* (ICMSF 1998, Microorganismos de los alimentos 6. Ecologia microbiana de los productos alimenticios [Microorganisms in foods 6. Microbial ecology of foods], Ed.Acribia, Zaragoza) (Parish, M.E., Journal of Food Safety, 18: 57-65, 1998). Their elimination requires treatments between 89-95°C. These treatments also guarantee the destruction of the main pathogenic microorganisms associated to these products. But microorganisms are not the only ones responsible for the juice alterations. Many natural enzymes such as pectin methylesterase, polyphenol oxidase, peroxidase or lipoxygenase are activated when the fruit internal structures break, producing colour and aspect alterations. Some of the enzymes are quite resistant to temperature, and also require treatments over 80°C to guarantee their inactivation (Bayindirli, A., et al., Food Control, 17: 52-58, 2006).

Thermal treatments have negative consequences on some of juice components, such as vitamins (vitamin C and other hydrosoluble vitamins), or loss of compounds responsible for the aroma and flavour. Also, they may produce the formation of undesirable compounds, resulting from Maillard reactions.

Ultra High Pressure Homogenization (UHPH) Technology is based on the same principles as conventional homogenization, with this one big difference that it can reach pressures higher than 200Mpa, thanks to the valve design and the use of new materials. UHPH treatment can be associated to emerging physical techniques since its action results from combined forces of shear, turbulence, cavitation and impact caused by the application of dynamic high pressures. Nevertheless, this technology must not be mistaken with another technology that uses high pressures as well such as High Hydrostatic Pressure treatment (HHP). This technology, like UHPH, was developed as an alternative to the conventional heat treatments in the destruction of pathogenic and altering microorganisms, but the systems or work equipment as well as the mechanism of microbial inactivation which acts in this technology are totally different compared with UHPH: HHP equipment works with loads (discontinuous process); this equipment is basically formed by a cylinder containing a pressure transmitting static fluid, a pressure generating system and a pressure intensifier; working at pressures between 400-1000MPa.

UHPH equipment developed so far are capable of processing fluids or pumpable food systems up to pressures of 400MPa working in continuous processes. Up to now, different high pressure homogenization equipment has been employed in the chemical and pharmaceutical industries, specially food and biotechnology in order to emulsify, diffuse, mix and process their products. This technology produces the disruption of dispersion particles including microorganisms. Particles can have a varied nature and are common in colloidal food such as cloudy juices. Among possible physical processes implied in microbial breakdown (main mechanism of microbial inactivation) during UHPH we can find: high pressure, sudden depressurization, impact forces, cut and torsion, turbulence and cavitation. The temperature increase of the product after passing through the valve contributes to microbial inactivation, since it is an additive effect to the physical forces developed at the homogenizer valve.

Even though we can consider UHPH technology as an alternative cold technology to the heat treatments, the fact is that during UHPH process there is a marked increase of the product temperature due to: (1) the pressure increase produced inside the intensifier and in the pipes located before the valve which generate the compression of the fluid (adiabatic heating temperature) and (2) the forces to which the fluid is subjected when passing through the high pressure valve and the conversion of kinetic energy into heat, which is not compensated with the adiabatic cooling.

The pressure increase preceding the homogenization stage and the friction caused by the fluid high speed, elevate product temperature approximately 2-2,5°C every 10MPa (a temperature increase of 20°C to 50°C in a homogenization cycle of 150MPa). However, this heat effect, which applies in ultra-short periods (<0.5 s) and which can, optionally, be cancelled or minimized to the maximum by introducing a cooling equipment in the system which, after the product pressure drop, controls temperature in a fast and efficient way.

It has been suggested that UHPH technology can produce the pasteurization of different products, including fruit juice (Donsi, F., et al., Chemical Engineering Science, 64:520-532, 2009). Some of the existing studies show that this technology allows the elimination of the main pathogenic microorganisms associated with fruit juice, such as E. coli 0157:H7, *Salmonella* spp. or *Listeria* spp. (Briñez, W., et al., Journal of Food Protection, 69: 86-92, 984-989, y 86: 241-249, 2006) (Velazquez-Estrada, R.M., et al., Food Control, forthcoming, 2010) in a magnitude similar to thermal pasteurization and close to the 5 log ufc/ml reduction, which is the one that the American *Food and Drug Administration* requires for treatments applied to fruit, vegetables and juices (Choi, L.H., et al., Journal of Food Quality, 28:13-29, 2005). Its effectiveness on altering microorganisms such as *Lactobacillus plantarum*, *Leuconostoc mesenteroides*, *Saccharomyces cerevisiae* or *Penicillium* ssp. has also been described (Tahiri, I., et al., Food Research International 39: 98-105, 2006). However, the effectiveness of the UHPH treatments depends on the pressure applied, the product inlet temperature and the maximum temperature reached, as well as the number of cycles or times the product passes through the valve.

As regards enzyme activity, Lacroix, N., et al. (Food Research International, 38: 569-576, 2005) have observed significant reductions of the activity of pectin methylesterase (PME), combining pressures of up to 170 Mpa with pre-heating at 50°C. However, even when the enzymatic inactivation was not complete, a significant improvement in the juice stability and its freshness properties during its storage were verified, probably due to the structural changes and pectin particle size reduction as a result of the treatment. Therefore, it would be very interesting to know the behaviour of PME, and other enzymes against higher homogenization pressures.

### Description of the invention

According to the invention, it is provided a procedure which allows (a) the microbial stabilization of the product without the use of additives, (b) the inactivation of the enzymes responsible for the phase separation of the fruit or vegetable juice, (c) maintaining the original colour, flavour and aromas of the juice, as well as protecting the nutritional characteristics, and (d) securing the stability of the juice properties for an extended period of time.

The procedure of the invention works continuously, based on a continuous system including, among others, ultra high pressure homogenization. The procedure comprises:
a. Extraction of fruit and/or vegetable juice through a continuous squeezing system and a sieve system with vibrating sieves of between 50 and 100 microns which filters the pulp of the fruit or vegetable.
b. Storage of the filtered juice at a temperature between 0°C and 4°C.
c. Pre-heating of the juice at a temperature (Tₚ) between 4 and 90°C. The temperature to be reached depends on the requirements and nature of the juice coming from the storage tank.
d. Treatment of the juice through ultra-high pressure homogenization, at a pressure (Pᵤ) of 200 to 400MPa, with or without retention, through an ultra-high pressure valve. In this way, the temperature of the juice is increased up to a Tᵤ value which is proportional to the' inlet temperature of the fluid Tₚ to the valve of the ultrahomogenizer and of the work pressure Pᵤ of said valve.
e. Instant cooling of the juice at an exit temperature Tₑ between 4 and 20°C, through a heat exchanger. Thus, the result is that the thermal effect produced in the preceding stage on the juice is reduced to a minimum.
f. Storage in an aseptic tank of the juice cooled down at the temperature Tₑ, and from which the cooled juice is sent to an aseptic packaging machine.
g. Aseptic packaging of the juice in an aseptic packaging system.

### Example

The following is an illustrative, non-limitative example of how the invention is performed. For all practical purposes, a UHPH sterilization process of orange juice will be used as an example.

Optimal treatment conditions
a) Extraction of the juice through a continuous extraction system, from 1000kg of oranges subjected to a previous wash,
b) Sieve using sieves of between 100 and 50 microns and storage at 4°C,
c) Heating of the juice up to a pre-heating temperature Tₚ of 20°C,
d) Ultra-homogenization of the pre-heated juice at a pressure Pₕ of 320MPa, and a retention time of 0.5s.

Table 1 shows the maximum temperatures reached by the juice under these pressure conditions during 0.5s
e) Instant cooling using a heat exchanger, until reaching a cooling temperature of 4-20°C,
f) Storage of the treated juice in a aseptic tank, at a temperature of 4-20°C, for its later aseptic packaging,
g) Aseptic packaging in a continuous aseptic packaging system.

In order to prove that the procedure attains optimum conditions from the ultra-high pressure homogenization (UHPH) treatment of the orange juice, until reaching certain characteristics of microbiological and enzymatic stability, but without considerably affecting the organoleptic and nutritional properties of the juice, the data relating to the study performed are provided below.

This study supposes the comparative analysis of two individual productions, using in each case different conditions of UHPH treatment, and taking the thermal treatments normally used for juice treatment as reference. The parameters shown were the most outstanding ones in the product quality.

### Thermal treatments and temperature and time conditions:

**A:** treatment at 90°C, 60 s, with plate exchanger (pasteurizer 1)
**B:** treatment at 90°C, 120 s, with plate exchanger (pasteurizer 2)
**C:** UHPH treatment: as shown in Table 1. All these treatments were applied with and without a 30 second retention prior to the cooling.

**Table 1. UHPH tested conditions and temperatures reached during the treatments (C)**

| | Real pressure (MPa) | Inlet temp.(°C) | Outlet temp.(°C) of the valve |
|---|---|---|---|
| Retention | Mean | Mean | Mean |
| No | 108.18 | 9.46 | 41.18 |
| Yes | 116.50 | 8.43 | 42.50 |
| No | 106.06 | 18.69 | 48.19 |
| Yes | 111.85 | 19.11 | 48.46 |
| No | 218.67 | 9.74 | 67.78 |
| Yes | 217.80 | 8.86 | 67.70 |
| No | 208.46 | 19.20 | 72.23 |
| Yes | 211.08 | 18.70 | 72.00 |
| No | 320.88 | 10.10 | 92.38 |
| Yes | 318.89 | 9.32 | 91.44 |
| No | 306.23 | 19.26 | 94.77 |
| Yes | 314.36 | 18.81 | 95.86 |

### Microbiological tests

In order to evaluate the effect of the treatments on juice microbiota and its evolution during the subsequent conservation under refrigeration, the following parameters were evaluated:
- Total recount of microorganisms at 30°C (mesophiles) and at 10°C (psychrotrophs)
- Recount of enterobacteria
- Recount of Coliforms
- Recount of acid-lactic microbiota
- Recount of yeast

The presence of *Salmonella* spp. and *Listeria* spp. in 25 ml of the fresh juice after it was squeezed was also analysed, just before the UHPH and pasteurization treatments. None of the samples analysed rendered a positive result.

### Physicochemical and biochemical analyses

To determine the effect of the treatments on the physicochemical and nutritional characteristics of the juices, the following parameters were evaluated
a) General composition characteristics
   - pH
   - Concentration in total soluble solids (°Brix) through a refractometer
   - Total acidity through potentiometric evaluation with alkaline solution at pH 8.1
   - Content of total and reducing sugars by the Luff-Schoorl method
b) Enzymatic activities:
   - Pectin methylesterase (PME). Its activity was determined through the continuous titration of the carboxyl, groups formed during the pectin hydrolysis by the extract using an automatic evaluator (Sila, D.N., et al., Journal of Food Engineering, 78:755-764, 2007). The effect of the PME inactivation was also evaluated by the maintenance or loss of opalescence of the juices measured as changes in transmittance at 660nm.
c) Nutritional value: The conservation of the vitamin value of the juices subjected to the treatment was evaluated only for vitamins C and antioxidant activity.
   - For vitamin C an evaluation of the content of ascorbic acid and dehydroascorbic acid (after reducing it to ascorbic) through an HPLC technique (Wimalasiri, P. & Wills, R.B.H., Journal of Chromatography 256: 368-371,1983).
   - The antioxidant activity was evaluated through a radical capture test (Sanchez-Moreno, C., et al., Journal of the Science of Food and Agriculture 83: 430-439, 2003). d) Particle size.

### Results

### Characterization of the starting juice

For the tests the juice obtained from oranges of the Valencia late variety was used. Table 2 shows the characteristics of the starting juice.

**Table 2. Results of the physicochemical parameters analyses in the starting orange juice.**

| Parameter | Mean value |
|---|---|
| °BRIX | 12.14 |
| Reducing sugars | 7.07 |
| Total sugars | 13.82 |
| pH | 3.18 |
| Citric acid | 1.34 |
| Cloudiness | 0.47 |

### Effects of the treatments on the microbiota of orange juice

Table 3 shows the results of the application of pasteurization treatments (60 and 120 seconds, at 90°C) and the different UHPH treatments (at pressures of 100, 200 and 300MPa), at inlet temperatures to the ultrahomogenization between 10°C and 20°C, with the application or not of a 30 second retention prior to the cooling, on the microbiological parameters analysed, taking as reference the results of the fresh orange juice (without processing). UHPH treatments, both at 200 and 300MPa, did not show significant differences as regards their effectiveness compared to the thermal treatments in any of the parameters studied.

**Table 3. Results of the application of thermal and UHPH treatments on the microbiological parameters of orange juice.**

| | | **Recounts (UFC/ml)** | | |
|---|---|---|---|---|
| Treatment | Total recount 30°C | Total recount 10 °C | Lactic bacteria | Yeasts |
| Untreated juice | 4.75 ± 0.48 | 4.58 ± 0.30 | 4.69 ± 0.40 | 4.26 ± 0.16 |
| 100MPa/10°C/0s | 4.78 ± 0.39 | 4.30 ± 0.04 | 4.50 ± 0.14 | 4.08 ± 0.13 |
| 100MPa/10°C/30s | 4.48 ± 0.51 | 4.16 ± 0.13 | 4.27 ± 0.22 | 3.93 ± 0.07 |
| 100MPa/20°C/0s | 4.32 ± 0.55 | 3.94 ± 0.62 | 4.45 ± 0.37 | 3.70 ± 0.19 |
| 100MPa/20°C/30s | 3.88 ± 0.24 | 3.69 ± 0.34 | 3.86 ± 0.31 | 3.07± 0.67 |
| 200MPa/10°C/Os | 0.89 ±1.04 | 0.37 ± 0.74 | ND | ND |
| 200MPa/10°C/30s | 1.47 ± 1.69 | 1.61 ± 1.86 | ND | ND |
| 200MPa/20°C/0s | 0.85 ± 0.91 | 0.37 ± 0.68 | ND | ND |
| 200MPa/20°C/30s | 0.59 ± 0.92 | 0.41 ± 0.66 | 0.14 ± 0.35 | ND |
| | | | | |
| 300MPa/10°C/0s | 0.37 ± 0.74 | 0.25 ± 0.50 | 0.50 ± 0.58 | ND |
| 300MPa/10°C/30s | 1.34 ± 1.55 | 1.40 ±1.62 | ND | ND |
| 300MPa/20°C/0s | 1.05 ± 1.15 | 0.20 ± 0.57 | ND | ND |
| 300MPa/20°C/30s | 0.43 ± 0.67 | 0.17 ± 0.41 | ND | ND |
| | | | | |
| 90°C/60s | 0.71 ± 0.92 | 0.15 ± 0.47 | ND | ND |
| 90°C/120s | ND | ND | ND | ND |

| | | | | |
|---|---|---|---|---|
| ND: not detected | | | | |

Continuation- Table 3. Results of the application of thermal and UHPH treatments on the microbiological parameters of orange juice.

| Treatment | Fungus | Enterobacteria | Coliforms |
|---|---|---|---|
| Untreated juice | 2.77 ± 0.58 | 2.06 ± 0.67 | 0.35 ± 0.36 |
| 100MPa/10°C/0s | 2.56 ± 0.70 | 2.14 ± 0.13 | 0.23 ± 0.29 |
| 100MPa/10°C/30s | 2.48 ± 0.52 | 2.12 ± 0.17 | 0.42 ± 0.51 |
| 100MPa/20°C/0s | 2.31 ± 0.37 | 1.93 ± 0.21 | ND |
| 100MPa/20°C/30s | 2.11 ± 1.35 | 1.36 ± 1.06 | ND |
| | | | |
| 200MPa/10°C/0s | ND | ND | ND |
| 200MPa/10°C/30s | ND | ND | ND |
| 200MPa/20°C/0s | ND | ND | ND |
| 200MPa/20°C/30s | ND | ND | ND |
| | | | |
| 300MPa/10°C/0s | ND | ND | ND |
| 300MPa/10°C/30s | ND | ND | ND |
| 300MPa/20°C/0s | ND | ND | ND |
| 300MPa/20°C/30s | ND | ND | ND |
| | | | |
| 90°C/1min | ND | 0.16 ± 0.34 | ND |
| 90°C/2min | ND | ND | ND |

Table 4 shows the results of the evolution of the microbiological parameters in samples which have undergone the thermal treatment and the UHPH treatment at 300 MPa and an inlet temperature of 20°C. The juice was packaged and maintained during 90 days at 20°C performing periodical microbiological analyses. In juices treated with UHPH, although the inactivation of the mesophile microbiota was not complete, no recounts were obtained in most of the parameters studied, and the surviving microorganisms did not show any significant growth during the 90 days of conservation at 20°C.

**Table 4. Evolution of the recounts of the microbiological parameters in fresh orange juice, which underwent thermal and UHPH treatments. The results are shows as the mean of 2 productions ± standard deviation.**

| | | | | | Recounts (UFC/ml) | | | | | | |
|---|---|---|---|---|---|---|---|---|---|---|---|
| Treatment | Days | Total aerobes at 30 °C | | Total aerobes at 10 °C | | Lactic acid bacteria | | Yeasts | | Enterobacteria | |
| | | X | SD | X | SD | X | SD | X | SD | X | SD |
| Fresh | | | | | | | | | | | |
| juice | 5 | 7.92 | 0.02 | 7.61 | 0.00 | 7.95 | 0.04 | 5.83 | 0.03 | ND | - |
| | 10 | 7.92 | 2.01 | 7.19 | 0.79 | 7.30 | 0.60 | 7.78 | 0.06 | ND | - |
| | 30 | 6.75 | 0.07 | 6.23 | 0.07 | 6.20 | 0.01 | ND | - | ND | - |
| UHPH | 5 | 1.45 | 0.10 | 2.15 | 0.23 | ND | - | ND | - | ND | - |
| | 10 | 0.58 | 0.68 | 1.88 | 2.17 | ND | - | 1.24 | 1.46 | ND | - |
| | 30 | 0.12 | 0.24 | ND | - | ND | - | ND | - | ND | - |
| | 45 | ND | - | ND | - | ND | - | ND | - | ND | - |
| | 60 | ND | - | 1.16 | 2.00 | ND | - | 1.18 | 2.04 | ND | - |
| | 75 | 1.07 | 1.52 | 1.97 | 2.79 | ND | - | 1.15 | 1.62 | ND | - |
| | 90 | 1.54 | 1.00 | ND | - | ND | - | ND | - | ND | |
| Thermal | | ND | | ND | | ND | | ND | | ND | - |
| treatment | 5 | | - | | - | | - | | - | | |
| | 10 | ND | - | ND | - | ND | - | ND | | ND | - |
| | 30 | 0.08 | 0.15 | ND | - | ND | - | ND - | | ND | - |
| | 45 | ND | - | ND | - | ND | - | ND - | | ND | - |
| | 60 | ND | - | ND | - | ND | - | ND - | | ND | - |
| | 75 | ND | - | ND | - | ND | - | ND - | | ND | - |
| | 90 | ND | - | ND | - | ND | - | ND - | | ND | - |

### Effect of the treatments on the pectin methylesterase (PME) activity of orange juice

Table 5 shows the results of PME activity on fresh orange juice and orange juice subjected to pasteurization and UHPH treatments. As it can be seen, the drop in the activity was significant in the samples treated at 100MPa and an inlet temperature of 20°C, although the inactivation was not total. However, in the treatments performed at 200MPa and 300MPa, the reduction of PME activity was equivalent to the one observed in the pasteurized juice.

**Table 5. PME activity on fresh orange juice and after being subjected to pasteurization and UHPH treatments.**

| | | | | | Pectin methylesterase activity | | |
|---|---|---|---|---|---|---|---|
| | Treatments | | | | | | |
| P | T | | | | | | |
| (MPa) | (°C) | Retention | N | Mean | Min. | Max. | (%initial activity) |
| 0 | | | 12 | 1,143 | 0,574 | 1,827 | 100,00 |
| 100 | 10 | no | 6 | 1,210 | 0,588 | 1,629 | 105,81 |
| 100 | 10 | yes | 6 | 1,176 | 0,489 | 1,718 | 102,82 |
| 100 | 20 | no | 6 | 0,798 | 0,523 | 1,082 | 69,75 |
| 100 | 20 | yes | 6 | 0,424 | 0,128 | 0,643 | 37,06 |
| 200 | 10 | no | 6 | 0,131 | 0,100 | 0,171 | 11,47 |
| 200 | 10 | yes | 6 | 0,145 | 0,086 | 0,202 | 12,68 |
| 200 | 20 | no | 6 | 0,129 | 0,111 | 0,149 | 11,27 |
| 200 | 20 | yes | 6 | 0,108 | 0,098 | 0,121 | 9,46 |
| | | | | | | | |
| 300 | 10 | no | 6 | 0,075 | 0,037 | 0,1'30 | 6,58 |
| 300 | 10 | yes | 6 | 0,064 | 0,036 | 0,094 | 5,63 |
| 300 | 20 | no | 6 | 0,044 | 0,035 | 0,051 | 3,84 |
| 300 | 20 | yes | 6 | 0, 037 | 0, 021 | 0,051 | 3, 20 |
| | | | | | | | |
| | 90 °C/60s | | 10 | 0,040 | 0,019 | 0,054 | 3,47 |
| | 90 °C/120s | | 4 | 0,039 | 0,030 | 0,049 | 3,42 |

### Effect of the treatments on the nutritional value of orange juice

Table 6 shows the results of the effect of the pasteurization and UHPH treatments on the levels of ascorbic acid in orange juice. As it can be seen in the table, the concentration dropped as the pressure and inlet temperature increased, however, the concentrations remained significantly higher than the pasteurized samples for most treatments.

**Table 6. Ascorbic acid in orange juice subjected to pasteurization and UHPH treatments.**

| Treatment | | | | | Ascorbic acid (mg/100g) | | |
|---|---|---|---|---|---|---|---|
| P (MPa) | T (°C) | Retention | N | Media | Min. | Max. | (%initial value) |
| 0 | | | 30 | 54.21 | 49.02 | 67.31 | 100.00 |
| 100 | 10 | no | 12 | 56.42 | 47.13 | 68.97 | 104.06 |
| 100 | 10 | yes | 12 | 57.66 | 51.08 | 67.57 | 106.35 |
| 100 | 20 | no | 18 | 49.53 | 44.81 | 56.33 | 91.36 |
| 100 | 20 | yes | 12 | 51.39 | 48.84 | 56.26 | 94.79 |
| | | | | | | | |
| 200 | 10 | no | 12 | 54.83 | 46.06 | 67.14 | 101.13 |
| 200 | 10 | yes | 12 | 52.75 | 44.12 | 65.12 | 97.31 |
| 200 | 20 | no | 18 | 49.47 | 46.50 | 54.814 | 91.25 |
| 200 | 20 | yes | 12 | 51.03 | 47.75 | 57.19 | 94.12 |
| | | | | | | | |
| 300 | 10 | no | 12 | 52.11 | 45.35 | 59.05 | 96.12 |
| 300 | 10 | yes | 12 | 47.85 | 38.79 | 56.05 | 88.27 |
| 300 | 20 | no | 18 | 47.57 | 42.09 | 53.79 | 87.75 |
| 300 | 20 | yes | 12 | 46.52 | 45.01 | 48.10 | 85.82 |
| | | | | | | | |
| | 90°, 60 s | | 26 | 45.07 | 38.40 | 50.33 | 83.14 |
| | 90°,120s | | 8 | 37.64 | 32.92 | 42.74 | 69.43 |

Table 7 shows the results of the effect of the pasteurization and UHPH treatments on the antioxidant activity of orange juice. In this case, the antioxidant activity was also higher in pressurized samples than in pasteurized samples, without differences being observed with respect to fresh orange juice.

**Table 7. Antioxidant activity of the orange juice subjected to pasteurization and UHPH treatments.**

| Treatments | | | | Antioxidants (TEAC Value) | | | |
|---|---|---|---|---|---|---|---|
| P (MPa) | T (°C) | Reten tion | N | Mean | Min. | Max. | (% initial activity) |
| 0 | | | 27 | 6036.03 | 4483.99 | 7446.04 | 100.00 |
| 100 | 10 | no | 12 | 6221.74 | 4555.16 | 7431.51 | 103.08 |
| 100 | 10 | yes | 12 | 5845.92 | 4875.44 | 7226.03 | 96.85 |
| 100 | 20 | no | 15 | 6722.25 | 5363.81 | 7661.87 | 111.37 |
| 100 | 20 | yes | 12 | 6422.82 | 5200.00 | 7625.90 | 106.41 |
| | | | | | | | |
| 200 | 10 | no | 12 | 5966.26 | 4626-.33 | 7359.15 | 98.84 |
| 200 | 10 | yes | 12 | 5924.37 | 5053.38 | 7218.31 | 98.15 |
| 200 | 20 | no | 15 | 6895.78 | 5300.75 | 8848.92 | 114.24 |
| 200 | 20 | yes | | 12 6492.89 | 5714.29 | 7553.96 | 107.57 |
| | | | | | | | |
| 300 | 10 | no | 12 | 5950.16 | 4519.57 | 7294.52 | 98.58 |
| 300 | 10 | yes | 12 | 5576.29 | 434164 | 6408.45 | 92.38 |
| 300 | 20 | no | 15 | 6595.00 | 5625.00 | 8345.32 | 109.26 |
| 300 | 20 | yes | 12 | 6249.91 | 4800.00 | 7625.90 | 103.54 |
| | | | | | | | |
| 90 °C/60s | | | 23 | 5822.79 | 4600.00 | 7191.78 | 96.47 |
| 90°C/120s | | | 8 | 4891.99 | 4200.00 | 5451.13 | 81.05 |

Table 8 shows the results of the effect of the pasteurization and UHPH treatments on phenolic compounds in orange juice. In this case, the decrease in the concentration of phenolic compounds was also much lower in the samples treated with UHPH than in the pasteurized samples, especially in the ones that underwent a 2 minute treatment.

**Table 8. Effect of the pasteurization and UHPH treatments on phenolic compounds in orange juice**

| Treatment | | | | Concentration of total phenolic compounds (µg/g) | | | |
|---|---|---|---|---|---|---|---|
| P (MPa) | T (°C) | Retention | N | Mean | Min. | Max. | (%initial value) |
| 0 | | | 24 | 771.02 | 630.89 | 1042.06 | 100.00 |
| 100 | 10 | no | 12 | 774.66 | 650.87 | 964.17 | 100.47 |
| 100 | 10 | yes | 12 | 801.61 | 677.73 | 1043.61 | 103.97 |
| 100 | 20 | no | 12 | 750.03 | 643.90 | 819.35 | 97.28 |
| 100 | 20 | yes | 12 | 733.78 | 635.77 | 827.88 | 95.17 |
| 200 | 10 | no | 12 | 780.72 | 620.85 | 965.73 | 101.26 |
| 200 | 10 | yes | 12 | 762.01 | 649.29 | 917.45 | 98.83 |
| 200 | 20 | no | 12 | 755.35 | 653.66 | 823.61 | 97.97 |
| 200 | 20 | yes | 12 | 738.23 | 655.06 | 867.71 | 95.75 |
| 300 | 10 | no | 12 | 729.16 | 611.37 | 880.06 | 94.57 |
| 300 | 10 | yes | 12 | 737.48 | 620.85 | 906.54 | 95.65 |
| 300 | 20 | no | 12 | 751.08 | 684.55 | 809.39 | 97.41 |
| 300 | 20 | yes | 12 | 662.13 | 499.19 | 810.81 | 85.88 |
| 90 °C,60s | | | 20 | 682.36 | 424.39 | 1037.38 | 88.50 |
| 90°C,120s | | | 8 | 479.27 | 408.13 | 528.48 | 62.16 |

The significant reduction of particle size produced by UHPH treatments is partly responsible for the greater stability of the juice, as it can be seen in Table 9.

**Table 9. Values corresponding to the particle size corresponding to the volume (D4,3) and surface (D3,2) expressed in µm, of orange juice samples that underwent thermal and UHPH treatments.**

| Treatment | | | D43 | D32 |
|---|---|---|---|---|
| | Inlet T(°C) | Retention (s) | Mean | Mean |
| Control | | | 275340.74 | 38833.69 |
| 100MPa | 10 | 0 | 77686.33 | 22510.33 |
| | | 1 | 82531.80 | 11413.60 |
| | 20 | 0 | 83427.94 | 11107.88 |
| | | 1 | 127296.44 | 14851.67 |
| 200MPa | 10 | 0 | 96651.56 | 21082.56 |
| | | 1 | 108919.78 | 12765.67 |
| | 20 | 0 | 99196.64 | 4195.27 |
| | | 1 | 134040.20 | 8536.80 |
| 300MPa | 10 | 0 | 74968.90 | 7630.90 |
| | | 1 | 47966.00 | 4271.67 |
| | 20 | 0 | 52509.76 | 1841.61 |
| | | 1 | 111248.36 | 3819.64 |
| | 90 °C | 60s | 261620.29 | 31350.10 |
| | | 120s | 102208.83 | 14924.00 |

| | | | | |
|---|---|---|---|---|
| D(4,3) value: mean diameter of equivalent volume D(3,2) value: mean diameter of equivalent surface area | | | | |

The treatment of orange juice, through the system herein described, with an inlet temperature to the ultrahomogenizer between 4 and 90°C and a pressure between 200-400MPa, produces the following results:
- Inactivation of the vegetal microbiota and a great part of the sporulated, both pathogenic and altering.
- Permanent PME inactivation.
- Greater physical stability vis-a-vis the product precipitation, greater than the one attained through a.thermal treatment.
- Good microbiological stability during its conservation.
- Smaller reduction of the nutritional value and of the organoleptic aspects (colour, odour and flavour) with respect to thermal treatments.

## Claims

1. Continuous procedure of sterilization of fruit and vegetable juices by means of ultra-high pressure homogenization (UHPH) for their stabilization and conservation, based on a system comprising a first heat exchanger for the pre-heating of the juice; a second exchanger for the cooling of the juice after its exit from the ultrahomogenizer; an aseptic tank which receives and stores the cooled juice and an aseptic packaging machine, **characterized in that** it comprises
a. extraction of fruit and/or vegetable juice through a continuous squeezing system and a sieve system to filter the pulp of the fruit or vegetable,
b. storage of the filtered juice at a temperature between 0°C and 4°C,
c. pre-heating the juice at a temperature (Tₚ) between 4 and 90°C,
d. treatment of the juice through ultra-high pressure homogenization at a pressure (Pᵤ) between 200 and 400MPa, with or without retention, through an ultra-high pressure valve,
e. instant cooling of the juice, after it passing through the valve, through a plate exchanger until reaching a temperature (Tₑ) between 4 and 20°C,
f. storage in an aseptic tank at the temperature between 4 and 20°C, and
g. aseptic packaging of the juice in an aseptic packaging system.
